(19) Europäisches Patentamt
European Patent Office
Office européen des brevets

(11) Numéro de publication : **0 248 693 B1**

(12) # FASCICULE DE BREVET EUROPEEN

(45) Date de publication du fascicule du brevet :
26.06.91 Bulletin 91/26

(51) Int. Cl.⁵ : **G21F 1/04**

(21) Numéro de dépôt : **87401051.5**

(22) Date de dépôt : **07.05.87**

(54) Composition de béton étanche à haute durabilité.

(30) Priorité : **07.05.86 FR 8606668**

(43) Date de publication de la demande :
**09.12.87 Bulletin 87/50**

(45) Mention de la délivrance du brevet :
**26.06.91 Bulletin 91/26**

(84) Etats contractants désignés :
**AT BE CH DE ES FR GB GR IT LI LU NL**

(56) Documents cités :
**CH-A- 484 010**
**FR-A- 1 169 530**
**GB-A- 2 023 056**

(56) Documents cités :
**KERNENERGIE, vol. 15, no. 1, janvier 1972,**
**pages 9-22, Akademie-Verlag, Berlin, DE; W.**
**GERULLIS et al.: "Abschirmbeton im Kern-**
**kraftwerk Rheinsberg"**

(73) Titulaire : **QUILLE**
**"Le Hastings"-2 Mail Pélissier B.P. 1048**
**F-76015 Rouen Cédex (FR)**

(72) Inventeur : **Ferte, Jean-Claude**
**Rue du Marais**
**F-27670 Bosc Roger En Roumois (FR)**

(74) Mandataire : **Schrimpf, Robert et al**
**Cabinet Regimbeau 26, Avenue Kléber**
**F-75116 Paris (FR)**

## Description

L'invention concerne une composition de béton étanche à haute durabilité convenant particulièrement pour réaliser des fûts ou des enceintes pouvant contenir des déchets industriels dangereux, du type solide ou liquide, notamment des déchets radioactifs ou des déchets chimiques toxiques.

Le béton de l'invention est essentiellement constitué de façon connue à partir d'un mélange de ciment, d'agrégats minéraux naturel ou artificiel, d'adjuvants éventuels et d'eau, mélange caractérisé par le fait qu'il contient également, pour 1 m³ de béton compacté et durci, 50 à 100 kg de fibres métalliques ayant une longueur de quelques centimètres, pour servir d'armatures au béton, et 20 à 50 kg de particules de fumée de silice pour boucher sensiblement tous les intervalles entre les grains de ciment, c'est-à-dire pratiquement tous les pores du béton.

Les fumées de silice, sous-produits de l'industrie du ferrosilicium, sont obtenues par filtration de fumées d'usines productrices de ferrosilicium et du silicium-métal. Elles réagissent avec le ciment (effet pouzzolanique). D'une densité d'environ 300 kg/m³, elles ont une surface spécifique d'environ 20 m²/gr, c'est-à-dire 20 à 100 fois supérieure à celle des grains de ciment, qui sont eux broyés ; le diamètre moyen des grains de fumée de silice est environ 100 fois inférieur à celui des grains de ciment. Elles sont un complément à la pâte du ciment en diminuant la porosité, l'eau libre, donc le retrait.

L'incorporation de fibres métalliques dans un béton a déjà été proposée pour augmenter la conductivité et l'absorption des rayons gamma par le béton (GB-A-2 023 056) et l'incorporation de farines de quartz a déjà éta proposée pour augmenter la pompabilité d'un béton pour protection biologique (KERNERNEGIE, Vol. 15 n°1, janvier 1972, pages 9-22, Akademie-Verlag, Berlin, DE.) mais, jusqu'à présent, on n'a pas proposé d'incorporer simultanément, dans un béton, des fibres métalliques et des matières aussi fines que des particules de fumées de silice.

La présence simultanée des fibres métalliques et des particules de fumée de silice est indispensable pour obtenir les résultats souhaités : à savoir un béton de haute performance en résistance à la traction et à la compression, présentant un faible retrait, très compact et pratiquement imperméable et d'une grande ductilité à la rupture.

Le béton obtenu est :

A - étanche vis-à-vis des matériaux qu'il renfermera (déchet ; nocifs) car il est :

a) moins perméable (essais de perméabilité aux gaz – l'azote couramment utilisé pour les bétons a dû être remplacé par de l'hélium plus actif pour que l'on obtienne un passage du gaz à travers un élément normalisé),

b) plus étanche aux éléments radioactifs (un essai de diffusion des éléments radioactifs du type tritium a donné des résultats extrêmement probants,

c) moins fissurable (retrait plus faible – le retrait superficiel est del'ordre de 200 μ pour des retraits habituellement obtenus de 300 à 400 μ) ;

B - étanche vis-à-vis des agents extérieurs (eau-gel...) du fait d'une meilleure compacité due à une porosité plus faible (essai d'étanchéité aux gaz).

On pense également que les particules de microsilice sont aptes à retenir les éléments de césium, ce qui est très favorable lorsque le béton est destiné à contenir des déchets radioactifs.

La coopération des fibres métalliques et des particules de fumée de silice améliore deux caractéristiques essentielles pour la durabilité du béton :

– la résistance à la flexion, vraisemblablement par l'augmentation d'adhérence entre la pâte intersticielle de particules de silice, de grains de ciment et les fibres d'armature,

Pour une même quantité de fibres et une même formulation de béton, on a obtenu les caractéristiques suivantes lors des essais réalisés :

|  |  | sans fumées et 190 l eau | avec fumées et 160 l eau | gain |
|---|---|---|---|---|
| Résistances compression | à 7 j | 25 MPa | 40 MPa | + 60 % |
|  | à 28 j | 35 MPa | 50 MPa | + 43 % |
| Résistance traction | à 7 j | 2.9 MPa | 4.6 MPa | + 58 % |
|  | à 28 j | 3.5 MPa | 5.1 MPa | + 46 % |

– la diminution de la vitesse de carbonatation.

## EXEMPLE.

Pour obtenir 1m³ de béton (après compactage et durcissement), on mélange les composants suivants :

| | |
|---|---|
| Granulats naturels (tamis de 3 mm à 10 mm) | : 1 000 à 1 100 kg |
| Sable | : 675 à 750 kg |
| Ciment | : 350 à 425 kg |
| Fibres d'acier | : 50 à 100 kg |
| Eau | : 135 à 165 litres |
| Plastifiant réducteur d'eau (1) | : 1 à 2 % en poids de ciment |
| Silice | : 20 à 50 kg |

(1) Cet adjuvant est utile notamment en raison de l'incorporation des fibres métalliques ; on peut le remplacer par un autre agent fluidifiant.

Les essais par fendage sur des éprouvettes cylindriques ont montré qu'à sept jours, avec un ciment très peu actif, la résistance à la traction est de 4,6 MPa, alors qu'elle n'était que de 3,5 MPa à 28 jours pour un béton sans fumée de silice.

## Revendications

1. Mélange pour béton, constitué de ciment, d'agrégats minéraux, de sable et d'adjuvants éventuels, caractérisé par le fait qu'il contient également, pour 1 m³ de béton compacté et durci, 50 à 100 kg de fibres métalliques ayant une longueur de quelques centimètres, pour servir d'armatures au béton, et 20 à 50 kg de particules de fumée de silice pour boucher sensiblement tous les intervalles entre les grains de ciment, c'est-à-dire pratiquement tous les pores du béton.

2. Mélange selon la revendication 1, caractérisé en ce qu'il comporte un adjuvant du type plastifiant-réducteur d'eau ou un agent fluidifiant.

3. Béton obtenu à partir d'un mélange selon l'une des revendications 1 et 2 et d'eau.

4. Application d'un mélange selon l'une des revendications 1 et 2 ou d'un béton selon là revendication 3 à la réalisation de fûts ou d'enceintes pour contenir des déchets industries dangereux, notamment des déchets radioactifs ou des déchets chimiques toxiques.

## Ansprüche

1. Betonmischung, bestehend aus Zement, mineralischen Zuschlagstoffen, Sand und eventuellen Zusätzen, dadurch **gekennzeichnet,** daß sie außerdem auf 1 m³ kompaktierten und ausgehärteten Beton 50-100 kg Metallfasern einer Länge von einigen Zentimetern, welche zum Armieren des Betons dienen, und 20-50 kg Partikel aus Siliziumdioxid-Dampf-Niederschlag zum Verstopfen im wesentlichen aller Zwischenräume zwischen den Zementkörnern, d.h. aller Poren des Betons, aufweist.

2. Mischung nach Anspruch 1, dadurch **gekennzeichnet,** daß sie einen Zusatz der Art eines Plastifizierungs-Verminderers mit Wasser oder einem anderen Verflüssigungsmittel aufweist.

3. Beton, der aus einer Mischung nach einem der Ansprüche 1 und 2 und Wasser erhalten ist.

4. Anwendung einer Mischung nach einem der Ansprüche 1 und 2 oder eines Betons nach Anspruch 3 zur Herstellung einer Tonne oder eines Sicherheitsbehälters zum Aufnehmen von gefährlichen Industrieabfällen, insbesondere von radioaktiven oder toxischen Chemie-Abfällen.

## Claims

1. Concrete mix, consisting of cement, mineral aggregates, sand and optional adjuvants, characterised in that it also contains, per 1 m³ of compacted and set concrete, 50 to 100 kg of metal fibres which are a few centimetres in length, to serve as reinforcements of the concrete, and 20 to 50 kg of silica smoke particles to plug substantially all the gaps between the cement particles, that is to say practically all the pores of the concrete.

2. Mix according to Claim 1, characterised in that it comprises an adjuvant of the plasticiser/water-reducer type or a workability agent.

3. Concrete obtained from a mix according to either of Claims 1 and 2 and water.

4. Application of a mix according to either of Claims 1 and 2 or of a concrete according to Claim 3 to the production of drums or enclosures for containing dangerous industrial wastes, especially radioactive wastes or toxic chemical wastes.